# FASCICULE DE BREVET EUROPEEN

(11) **EP 3 991 882 B1**
(45) Date de publication et mention de la délivrance du brevet: **12.07.2023**
(21) Numéro de dépôt: 20306288.0
(22) Date de dépôt: 27.10.2020
(51) Int. Cl.: B22F 5/04, B22F 7/08, C22C 47/06, C22C 47/08, C22C 49/06, B22D 19/02, B22D 19/14, B23P 15/04, F04D 29/02, F04D 29/54, F04D 29/32, B22C 9/06, B22C 9/22

(54) **PROCÉDÉ DE FABRICATION D'UNE AUBE POUR TURBOMACHINE**
VERFAHREN ZUR HERSTELLUNG EINER LEITSCHAUFEL FÜR EIN TURBOTRIEBWERK
METHOD FOR MANUFACTURING A BLADE FOR A TURBINE ENGINE

(43) Date de publication de la demande: 04.05.2022
(73) Titulaire: SAFRAN, 75015 Paris (FR); Safran Aero Boosters, 4041 Herstal (BE)
(72) Inventeur: LEFAUX, Yann Jean-Pierre, 4041 HERSTAL (BE); SALLOT, Pierre, Jean, 77550 MOISSY-CRAMAYEL (FR)
(74) Mandataire: Ernest Gutmann - Yves Plasseraud S.A.S.

(56) Documents cités:
- EP-A1- 2 843 193
- WO-A1-97/33009
- FR-A1- 3 081 370

## Description

### Domaine technique de l'invention

Le présent document concerne un procédé de fabrication d'une aube pour turbomachine comportant un pied en alliage à base de titane relié à une pale radiale à base d'aluminium.

### Etat de la technique antérieure

Une nouvelle architecture de turbomachine est recherchée afin de satisfaire les besoins de l'aviation. Cette nouvelle architecture nécessite une mise en oeuvre de compresseurs capables de supporter de fortes vitesses de rotation. Ce changement d'architecture induit des contraintes supplémentaires ou nouvelles, qu'il est nécessaire de considérer dans la fabrication des aubes rotoriques et statoriques de compresseurs.

Parmi celles-ci, la masse des aubages en rotation est notamment un défi. Classiquement, il est connu de fabriquer des aubes comprenant un pied et une pale, les aubes étant réalisées en titane afin d'assurer une certaine résistance mécanique à l'ensemble. Cependant, les aubages en alliage de titane imposent des efforts centrifuges importants, notamment sur le disque portant lesdites aubes, rendant la recherche de nouveaux matériaux à faible densité nécessaire.

Employer des alliages tels que de l'aluminium afin de réduire la densité de la pale n'est pas sans conséquence. En effet, une telle configuration d'aube comportant de l'aluminium est sujette à des contraintes mécaniques, thermiques, et de résistance à l'environnement. Il est dès lors impossible d'utiliser des alliages d'aluminium standard puisqu'ils ne présenteraient pas un durcissement structural adéquat.

Il est connu du brevet WO2019211583 de réaliser des pièces où une enveloppe est en composite fibre longue/métal avec un coeur en mousse. Ce type de pièces est fabriqué en employant une étape d'injection de métal liquide et un procédé de moulage permettant d'obtenir une pièce « net-shape ». Néanmoins, ce procédé n'a pas été appliqué à des aubes.

WO97/33009 divulgue un procédé de fabrication d'une aube pour turbomachine, réalisée par infiltration d'une préforme céramique.

En outre, ledit brevet n'aborde pas la problématique s'agissant d'une aube dont le pied comporte un alliage de titane et la pale comprend une base en un autre alliage dont la densité est plus favorable à une réduction de masse. L'assemblage de deux alliages distincts en une aube rencontre une problématique spécifique dans la réalisation.

Dans un tel contexte, d'autres problématiques interviennent. Ainsi, des phénomènes d'érosion par des particules ingérées en entrée d'air sont d'autant plus prégnants que la vitesse de rotation recherchée est importante. En outre, il est aussi nécessaire de rechercher une résistance telle que l'aube puisse supporter l'ingestion d'objets de grande taille tels que des oiseaux. Enfin, dans de telles conditions de vitesse, des risques accrus d'accrétion de glace sont également à déplorer.

En ce qui concerne l'accrétion de glace, le moyen le plus simple d'éviter cette problématique est de rendre la surface du matériau en question hydrophobe. La plupart des solutions existantes consistent donc à déposer en surface des aubes un revêtement qui assure cette fonction. Néanmoins, l'érosion induite par les particules ingérées peut dégrader ces revêtements et leur capacité à rendre la surface hydrophobe.

### Présentation de l'invention

Le présent document concerne un procédé de fabrication d'une aube pour turbomachine comportant un pied relié à une pale s'étendant selon une direction longitudinale, le procédé comprenant les étapes:
a) fournir un pied en alliage à base de titane, le pied étant destiné à être assemblé sur un disque, ledit pied étant réalisé préférentiellement en fabrication additive ;
b) fournir un moule comprenant une première empreinte et une seconde empreinte délimitant ensemble une cavité dans laquelle l'aube est destinée à être formée, ladite cavité comprenant un premier espace destiné à former la pale et un seconde espace destiné à former le pied,
c) fournir des feuillards d'aluminium comportant un revêtement comprenant au moins l'une des fonctions hydrophobe et anti-érosion et les placer au contact :
   ∘ de la première empreinte dans la premier espace de la cavité et / ou
   ∘ de la seconde empreinte dans le premier espace de la cavité ;
d) placer un renfort fibreux dans le premier espace de la cavité et / ou dans le second espace de la cavité et au moins partiellement au contact des feuillards d'aluminium;
e) agencer ledit pied d'aube dans le second espace de la cavité dudit moule ;
f) injecter un composé comprenant de l'aluminium dans le premier espace de la cavité du moule de manière à ce le composé imprègne le renfort fibreux.

Le renfort fibreux permet à la surface de résister aux différents modes de vibration, sollicitation en fatigue, mais également d'apporter les propriétés mécaniques nécessaires à la pale. Ce renfort fibreux est également un frein à la propagation de potentielles fissures, permettant une meilleure tolérance aux dommages des pièces et donc une bonne durabilité et une grande fiabilité du produit. Le taux de fibre doit également permettre de conserver une certaine ductilité nécessaire à la tenue à l'ingestion d'objets externes tels que des oiseaux.

L'utilisation de ce renfort fibreux permettra à la fois la tenue mécanique de l'aubage mais également permettra de résister à l'érosion induite par l'ingestion de particules externes.

En outre, les propriétés de résistivité électrique accrues de l'aluminium employé dans le composé et le renfort fibreux formé peuvent permettre un dégivrage par le passage d'un courant électrique et chauffage par effet Joule.

A l'étape c), des nanotubes de carbone peuvent être placés, de préférence par dépôt chimique en phase vapeur, sur une face externe desdits feuillards d'aluminium et lesdits nanotubes de carbone comprenant des extrémités libres faisant face soit à la première empreinte dans le premier espace de la cavité soit à la seconde empreinte dans le premier espace de la cavité. Les nanotubes de carbone ont un caractère très hydrophobe qui permet de limiter les phénomènes d'accrétion de glace. Ces nanotubes de carbones viennent, en outre, durcir la face portant lesdits feuillards d'aluminium, ce qui contribue également à la protection contre l'érosion.

Lesdits feuillards d'aluminium peuvent être maintenus dans le moule par collage.

Lors de l'injection du composé comportant de l'aluminium, la colle maintenant les feuillards d'aluminium est détruite, ce qui rend la méthode de collage très opérationnelle et non contraignante.

Le renfort fibreux peut comprendre une structure tissée comprenant un agencement de fils de trames et de fils de chaines, les fils de chaines s'étendant selon la direction longitudinale et les fils de trames s'étendant selon une direction transverse, perpendiculaire à la direction longitudinale.

Les fils de chaine peuvent présenter une dimension longitudinale comprise entre 10 et 100% de la dimension longitudinale de la pale à fabriquer et les fils de trames peuvent présenter une dimension transverse comprise entre 10 et 100% de la dimension transverse de la pale à fabriquer.

Ce renfort fibreux permet un renfort dans le sens longitudinal et transversal de la surface de l'aube. Ces fibres longues permettent de rendre plus isotrope le comportement mécanique du matériau une fois injecté.

Ledit renfort fibreux peut présenter un rapport entre le nombre de fils de trames et le nombre de fibres de chaines compris entre 0 et 0,5.

Ledit renfort fibreux peut être conformé de manière à présenter en surface des rainures perpendiculaires à l'axe longitudinal définies entre les fils de trames, la largeur de ces rainures étant comprise entre 10 et 150 µm.

Cette caractéristique du renfort fibreux permet d'apporter une fonction hydrophobe à la surface de la pale.

Les rainures perpendiculaires à l'axe longitudinal peuvent être telles qu'un rapport h/s est compris entre 0,1 et 0,6 avec h désignant une amplitude moyenne des rainures perpendiculaires à l'axe longitudinal en µm et s désignant une période spatiale des rainures perpendiculaires à l'axe longitudinal en µm.

Un paramètre de rugosité moyenne arithmétique d'un profil de la surface de la pale Ra peut être compris entre 10 et 200 µm.

Cette optimisation du paramètre de rugosité moyenne arithmétique du profil de la surface de la pale Ra constitue une méthode afin d'obtenir une hydrophobicité de la surface de la pale et une sensibilité plus faible à l'érosion. Cette méthode est d'autant plus adaptée que les rugosités à atteindre sont élevées. La rugosité ainsi atteinte permet d'améliorer les performances aérodynamiques de la surface et d'obtenir une texture adaptée au décollement de couches limites.

Ledit composé peut être une mousse d'aluminium.

La faible densité de la mousse permet de réduire la masse de la pale et d'avoir des propriétés de résistivité électrique accrues.

Ledit composé peut comprendre un alliage d'aluminium.

### Brève description des figures

[Fig. 1] est une représentation schématique d'un moule et des étapes b) à d) d'un procédé selon l'invention ;
[Fig. 2] est une représentation schématique d'un moule et de l'étape e) d'un procédé selon l'invention ;
[Fig. 3] est une représentation schématique d'un moule et de la suite de l'étape e) d'un procédé selon l'invention ;
[Fig. 4A] est une représentation schématique d'un feuillard d'aluminium selon l'invention ;
[Fig. 4B] est une représentation schématique d'un feuillard d'aluminium fonctionnalisé par des nanotubes de carbones selon l'invention ;
[Fig. 4C] est une image obtenue par microscopie d'un dépôt de nanotubes de carbone selon l'invention ;
[Fig. 5] est une représentation schématique des rainures perpendiculaires à l'axe longitudinal selon l'invention.

### Description détaillée de l'invention

Le présent document concerne une aube comprenant un pied 1 en un alliage à base de titane compatible avec les matériaux employés pour un disque portant lesdits pieds d'aube. Cette compatibilité permet d'envisager un assemblage direct entre l'aube et le disque (ou la virole) par soudage par friction par exemple. Ladite aube comporte, en outre, une pale comprenant un alliage d'aluminium.

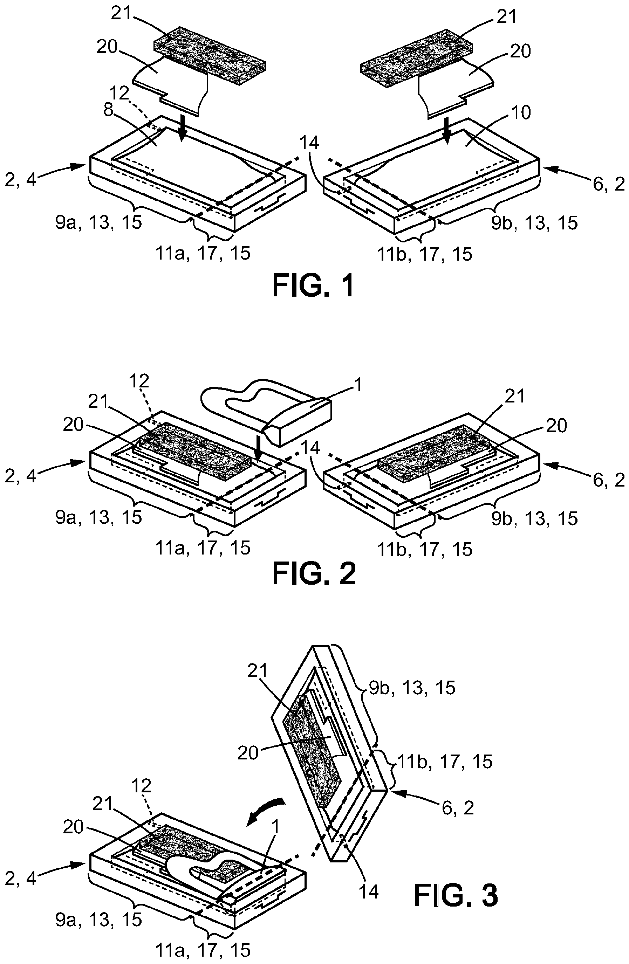

Comme illustré en figure 1, un moule 2 est utilisé afin de fabriquer une telle aube. Ladite aube à fabriquer épouse in fine la géométrie du moule 2. Le moule 2 comprend au moins une première coque 4 et une seconde coque 6 qui agencées l'une contre l'autre forment ledit moule 2. La première coque 4 comporte une première face interne formant une première empreinte 8. La seconde coque 6 comporte une seconde face interne formant une seconde empreinte 10. Lorsque la première coque 4 et la seconde coque 6 sont assemblées l'une contre l'autre, la première empreinte 8 et la seconde empreinte 10 forment ensemble une cavité dans laquelle l'aube est destinée à être formée.

La première empreinte 8 et la seconde empreinte 10 comprennent chacune une première zone 9a, 9b et une seconde zone 11a, 11b. La première zone 9a de la première empreinte 8 délimite avec une première zone 9b de la seconde empreinte 10 un premier espace 13 de la cavité 15 laquelle est destinée à former la pale. La seconde zone 11a de la première empreinte 8 délimite avec la seconde zone 11b de la seconde empreinte 10 un second espace 17 de la cavité 15 laquelle est destinée à former le pied 1. Le premier espace 13 de la cavité 15 et le second espace 17 de la cavité 15 forment ensemble la cavité interne du moule 2 destinée à former l'aube comme indiqué précédemment.

La première coque 4 comporte un premier canal interne 12 dont une première extrémité débouche au niveau du premier espace 13 de la cavité 15 et une seconde extrémité débouche à l'extérieur dudit moule 2. La seconde coque 6 comporte un second canal interne 14 dont une première extrémité débouche au niveau du second espace 17 de la cavité 15 et une seconde extrémité débouche à l'extérieur dudit moule 2.

Le premier espace 13 de la cavité 15 délimite un espace dans lequel est injecté ce qui est destiné à former la pale. Le second espace 17 de la cavité 15 est, en outre, apte à recevoir notamment le pied de l'aube fabriqué de préférence par fabrication additive.

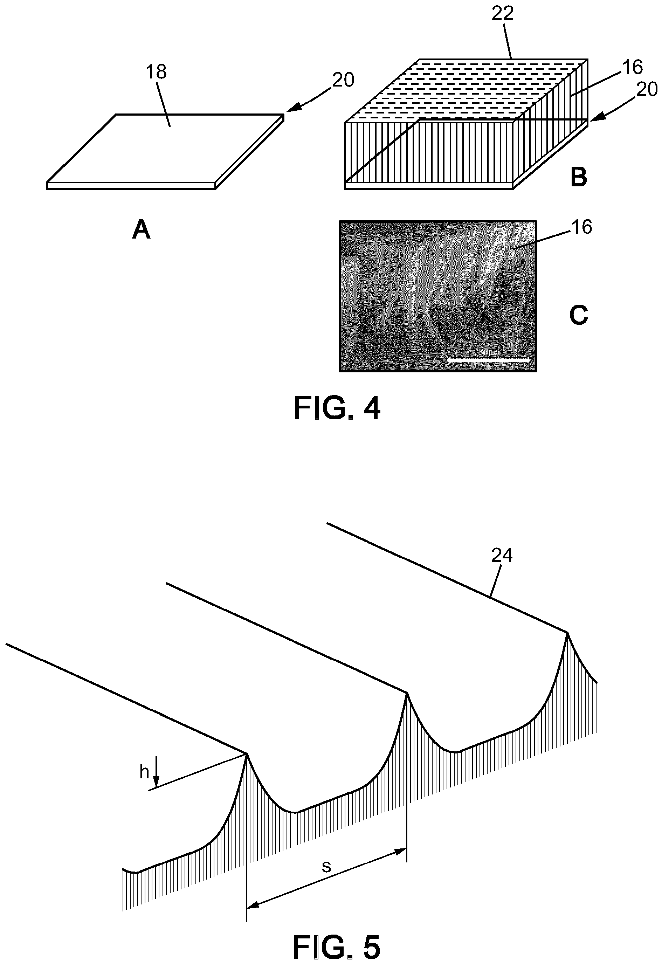

Selon le présent document, on utilise un feuillard métallique 20 à faible densité comprise entre 2 et 5, de préférence en aluminium. Ce feuillard métallique 20 comprend une face interne et une face externe. Ce feuillard métallique 20 peut être un feuillard en titane. La face externe du feuillard d'aluminium comporte un revêtement apte à créer une fonction d'hydrophobicité et/ou d'anti-érosion. Comme illustré en figure 4, des nanotubes de carbone 16 peuvent également être déposés, de préférence par dépôt chimique en phase vapeur, aussi connu sous l'acronyme CVD pour « Chemical Vapor Déposition » sur cette face externe 18 du feuillard d'aluminium 20. Lesdits nanotubes de carbone 16 sont orientés perpendiculairement à ladite face externe 18 du feuillard d'aluminium 20. L'épaisseur de dépôt de nanotube de carbone 16 est comprise entre 20 et 500 µm.

Cependant, d'autres revêtements peuvent également être envisagés. Ces autres revêtements ont pour caractéristique de ne pas avoir de phases susceptibles d'être en fusion dans un intervalle compris entre 600 et 700°C afin de ne pas contaminer l'aluminium, ni former de phases fragilisantes avec l'aluminium.

Comme illustré en figure 2, les feuillards d'aluminium 20 ainsi fonctionnalisés par le ou les revêtements sont ensuite découpés à la taille souhaitée pour être positionnés dans le moule. Une partie des feuillards d'aluminium sont positionnés contre la première zone 9a de la première empreinte 8 et/ou des feuillards d'aluminium sont positionnés contre la première zone 9b de la seconde empreinte 10 délimitant la cavité 15. Les feuillards d'aluminium 20 sont maintenus en position par collage. Lors d'une fonctionnalisation des feuillards d'aluminium par des nanotubes de carbone, ces nanotubes de carbone comprennent des extrémités libres, c'est-à-dire des extrémités non liées aux feuillards d'aluminium d'un côté opposé à des extrémités liées aux feuillards d'aluminium 20, faisant face à la première zone 9a de la première empreinte 8 ou à la première zone 9b de la seconde empreinte 10.

Comme illustré en figure 1 et 2, un renfort fibreux 21 est placé dans le premier espace 13 de la cavité 15du moule 2 et au moins partiellement au contact des feuillards d'aluminium 20. Le renfort fibreux 21 pourrait aussi être intégralement en contact avec les feuillards d'aluminium 20.

Dans un mode de réalisation particulier, seul le renfort fibreux 21 est placé dans le premier espace 13 de la cavité 15 du moule 2.

Ce renfort fibreux 21 comporte préférentiellement un tissu bidimensionnel ou tridimensionnel comprenant des fils de chaines et des fils de trames. Les fils de chaines s'étendent selon la direction longitudinale et les fils de trames selon une direction transverse perpendiculaire à la direction longitudinale.

Les fils de trames et les fils de chaines comprenant de l'aluminium comportent une première extrémité fixée à la première zone 9a de la première empreinte 8 et une seconde extrémité maintenant le renfort fibreux 21 placés dans le premier espace 13 de la cavité 15. De même, des fils de trames et de chaines comprenant de l'aluminium comportent une première extrémité fixée à la première zone 9b de la seconde empreinte 10 et une seconde extrémité maintenant le renfort fibreux 21 placés dans le premier espace 13 de la cavité 15.

Les fils de trames et les fils de chaines comportent une longueur qui est imposée par la taille de la pièce. Les fils de chaines orientées selon la direction longitudinale présentent une dimension longitudinale comprise entre 10 et 100% de la dimension longitudinale de la pale à fabriquer. Les fils de trames orientées transversalement à la direction longitudinale présentent une dimension transverse comprise entre 10 et 100% de la dimension transverse de la pale à fabriquer. Le taux volumique de fils de trames et de chaines est le même dans toutes les zones comportant ce renfort fibreux 21. Ce tissu permet ainsi un renfort dans le sens longitudinal et transversal de la surface de l'aube.

Concernant l'orientation des fils de trames et des fils de chaines, les fils de chaines sont majoritaires même si les fils de trames sont également présents dans la direction transverse perpendiculaire à la direction longitudinale afin de réduire l'anisotropie. Un ratio défini par un rapport entre le nombre de fils de trame et le nombre de fils de chaines est compris entre 0 et 0.5.

Dans un mode de réalisation particulier, les fibres sont de préférence en alumine.

Pour apporter une fonction hydrophobe à la surface de la pale, un motif particulier est réalisé par le tissu du renfort fibreux 21. C'est le motif entre les fils de chaînes et les fils de trames qui permet d'adapter la rugosité de surface aux besoins, mais également de rendre évolutive cette dernière en fonction des zones sollicitées sur l'aubage. Ce motif du tissu du renfort fibreux 21 est tel qu'un paramètre de rugosité moyenne arithmétique d'un profil de la surface de la pale appelé Ra est compris entre 10 et 200 µm. Cela permet de réaliser la fonction d'hydrophobicité de la surface de la pale.

Pour atteindre une telle valeur de Ra, l'agencement des fils de trames et des fils de chaines est optimisé. Cette optimisation tient compte du diamètre des fils. Ainsi, comme illustré en figure 5, ledit renfort fibreux 21 est conformé de manière à présenter en surface des rainures perpendiculaires à l'axe longitudinal 24 appelées riblets définies entre les fils de trames. Ces rainures perpendiculaires à l'axe longitudinal comprennent une largeur comprise entre 10 et 150 µm, avec un ratio h/s compris entre 0,1 et 0,6 où h désigne une amplitude moyenne des rainures perpendiculaires à l'axe longitudinal et s désigne une période spatiale des rainures perpendiculaires à l'axe longitudinal.

La rugosité de surface de l'aube peut également être imprimée à la surface de la pale en modifiant la première zone 9a de la première empreinte 8 et/ou la première zone 9b de la seconde empreinte 10 peut aussi être optimisée en utilisant, par exemple, un laser de sorte à obtenir un paramètre de rugosité Ra fin compris entre 500 nm et 100µm. Il est également possible de générer directement le paramètre Ra souhaité à la surface de la pale une fois démoulée. Cette optimisation des premières zones 9a, 9b de la première 8 et de la seconde empreinte 10 constitue une seconde méthode afin d'obtenir une hydrophobicité de la surface de la pale. Cette seconde méthode sera d'autant plus adaptée que les rugosités à atteindre seront élevées. La rugosité ainsi atteinte permet d'améliorer les performances aérodynamiques de la surface et d'obtenir une texture adaptée au décollement de couches limites.

Ce renfort fibreux 21 permet ainsi à la surface de résister aux différents modes de vibration, sollicitation en fatigue. Ce renfort fibreux 21 est également un frein à la propagation de potentielles fissures, permettant une meilleure tolérance aux dommages des pièces et donc une bonne durabilité et une grande fiabilité du produit. Le taux de fibre doit également permettre de conserver une certaine ductilité nécessaire à la tenue à l'ingestion d'objets externes tels que des oiseaux.

L'emploi de fibres en alumine permet d'obtenir une neutralité avec l'aluminium liquide.

L'utilisation de ce renfort fibreux 21 permettra à la fois la tenue mécanique de l'aubage mais également permettra de résister à l'érosion induite par l'ingestion de particules externes.

Ensuite, comme illustré aux figures 2 et 3, le pied 1 est placé dans le second espace 17 de la cavité 15 du moule 2 et maintenu dans ce second espace 17 de la cavité 15 grâce à un logement qui épouse exactement la géométrie du pied 1. Puis, la première empreinte 8 et la seconde empreinte 10 du moule sont posées l'une contre l'autre de sorte à refermer le moule.

Le premier canal interne 12 de la première empreinte 8 du moule permet d'amener l'aluminium liquide alors que le second canal interne 14 de la seconde empreinte 10 est apte à tirer le vide dans le moule. Lors de l'injection d'une mousse comportant de l'aluminium, la colle maintenant les feuillards d'aluminium est détruite. L'aluminium est injecté au centre du premier espace 13 de la cavité 15 entre le renfort fibreux situé contre la première zone 9a de la première empreinte 8 et le renfort fibreux situé contre la première zone 9b de la seconde empreinte 10. Cela permet de venir plaquer le renfort fibreux respectivement contre la première empreinte 8 et la seconde empreinte 10 du moule 2. Les fils permettant le maintien du renfort fibreux disparaissent durant l'injection en fusionnant avec l'aluminium injecté. La pale comporte ainsi un coeur en mousse à base d'aluminium permettant d'atteindre des densités faibles. Les propriétés de conduction électrique de l'aluminium peuvent permettre un dégivrage par le passage d'un courant électrique et chauffage par effet Joule. En alternative de cette mousse à base d'aluminium, la pale peut comporter un coeur comprenant un alliage d'aluminium pouvant comprendre des nano-renforts par exemple de type carbure de silicium SiC ou alumine.

Concernant la fonctionnalisation de la surface de la pale par des nanotubes de carbone 16, des interactions spécifiques interviennent lors de l'injection de l'aluminium liquide. En effet, lors du dépôt de nanotubes de carbone 16 sur la face externe 18 de feuillard d'aluminium 20, les nanotubes de carbone 16 ne sont reliés qu'à leur extrémité avec l'aluminium. Ces nanotubes de carbone 16 sont souvent composés de plusieurs feuillets mono-atomiques de carbone enroulés les uns autour des autres. Lorsque l'aluminium liquide infiltre la base des nanotubes de carbone 16, les premiers feuillets du nanotube de carbone 16 interagissent avec l'aluminium, le carbone des feuillets diffuse dans l'aluminium. Cette inter diffusion donne naissance à des carbures, comme Al₄C₃, qui viennent ainsi entourer la base des nanotubes de carbones 16. Ceci correspond à un ancrage métallurgique des nanotubes dans la matrice aluminium, ce qui permet de les assembler individuellement avec la surface en aluminium. Ces carbures viennent également durcir la surface sous-jacente, ce qui contribue également à la protection contre l'érosion.

## Revendications

1. Procédé de fabrication d'une aube pour turbomachine comportant un pied (1) relié à une pale s'étendant selon une direction longitudinale, le procédé comprenant les étapes:
a) fournir un pied (1) en alliage à base de titane, le pied (1) étant destiné à être assemblé sur un disque, ledit pied (1) étant réalisé préférentiellement en fabrication additive;
b) fournir un moule (2) comprenant une première empreinte (8) et une seconde empreinte (10) délimitant ensemble une cavité (15) dans laquelle l'aube est destinée à être formée, ladite cavité (15) comprenant un premier espace (13) destiné à former la pale et un seconde espace (17) destiné à former le pied (1),
c) fournir des feuillards d'aluminium (20) comportant un revêtement comprenant au moins l'une des fonctions hydrophobe et anti-érosion et les placer au contact :
∘ de la première empreinte (8) dans le premier espace (13) de la cavité (15) et/ou
∘ de la seconde empreinte (10) dans le premier espace (13) de la cavité (15) ;
d) placer un renfort fibreux (21) dans le premier espace (13) de la cavité (15) et / ou dans le second espace (17) de la cavité et au moins partiellement au contact des feuillards d'aluminium (20) ;
e) agencer ledit pied (1) d'aube dans le second espace (17) de la cavité (15) dudit moule (2) ;
f) injecter un composé comprenant de l'aluminium dans le premier espace (13) de la cavité (15) du moule (2) de manière à ce que le composé imprègne le renfort fibreux.

2. Procédé selon la revendication 1, dans lequel, à l'étape c), des nanotubes de carbone (16) sont placés, de préférence par dépôt chimique en phase vapeur, sur une face externe (18) desdits feuillards d'aluminium (20) et lesdits nanotubes de carbone (16) comprenant des extrémités libres (22) faisant face soit à la première empreinte (8) dans la premier espace (13) de la cavité (15) soit à la seconde empreinte (10) dans le premier espace (13) de la cavité (15).

3. Procédé selon l'une des revendications précédentes, dans lequel lesdits feuillards d'aluminium (20) sont maintenus dans le moule par collage.

4. Procédé selon l'une des revendications précédentes, dans lequel le renfort fibreux comprend une structure tissée comprenant un agencement de fils de trames et de fils de chaines, les fils de chaines s'étendant selon la direction longitudinale et les fils de trames s'étendant selon une direction transverse, perpendiculaire à la direction longitudinale.

5. Procédé selon la revendication 4, dans lequel les fils de chaines présentent une dimension longitudinale comprise entre 10 et 100% de la dimension longitudinale de la pale à fabriquer et les fils de trames présentent une dimension transverse comprise entre 10 et 100% de la dimension transverse de la pale à fabriquer.

6. Procédé selon l'une des revendications 4 ou 5, dans lequel ledit renfort fibreux (21) présente un rapport entre le nombre de fils de trames et le nombre de fibres de chaines compris entre 0 et 0,5.

7. Procédé selon l'une des revendications 4 à 6, dans lequel ledit renfort fibreux (21) est conformé de manière à présenter en surface des rainures perpendiculaires à l'axe longitudinal (24) définies entre les fils de trames, la largeur de ces rainures étant compris entre 10 et 150 µm.

8. Procédé selon la revendication 7, dans lequel les rainures perpendiculaires à l'axe longitudinal (24) sont telles qu'un rapport h/s est compris entre 0,1 et 0,6 avec h désignant une amplitude moyenne des rainures perpendiculaires à l'axe longitudinal en µm et s désignant une période spatiale des rainures perpendiculaires à l'axe longitudinal en µm.

9. Procédé selon la revendication 6 ou 8, dans lequel un paramètre de rugosité moyenne arithmétique d'un profil de la surface de la pale Ra est compris entre 10 et 200 µm.

10. Procédé selon l'une des revendications précédentes, dans lequel ledit composé est une mousse d'aluminium.

11. Procédé selon l'une des revendications précédentes, dans lequel ledit composé comprend un alliage d'aluminium.

## Patentansprüche

1. Verfahren zur Herstellung einer Schaufel für eine Turbomaschine bzw. ein Turbotriebwerk, enthaltend einen Schaufelfuß (1), der mit einem sich in Längsrichtung erstreckenden Schaufelblatt verbunden ist, wobei das Verfahren die folgenden Schritte umfasst:
a) Bereitstellen eines Schaufelfußes (1) aus einer Legierung auf Titanbasis, wobei der Schaufelfuß (1) dazu bestimmt ist, auf einer Scheibe montiert zu werden, wobei der Schaufelfuß (1) vorzugsweise durch additive Fertigung hergestellt wird;
b) Bereitstellen einer Gussform (2) mit einer ersten Vertiefung (8) und einer zweiten Vertiefung (10), die zusammen eine Kavität (15) begrenzen, in der die Schaufel geformt werden soll, wobei die Kavität (15) einen ersten Raum (13) zum Formen des Schaufelblattes und einen zweiten Raum (17) zum Formen des Schaufelfußes (1) umfasst,
c) Bereitstellen von Aluminiumbändern (20) mit einer Beschichtung, die zumindest eine der Funktionen wasserabweisend und erosionshemmend umfasst, und Anordnen der Bänder in Kontakt mit:
o der ersten Vertiefung (8) im ersten Raum (13) der Kavität (15) und/oder
∘ der zweiten Vertiefung (10) im ersten Raum (13) der Kavität (15);
d) Anordnen einer Faserverstärkung (21) in dem ersten Raum (13) der Kavität (15) und/oder in dem zweiten Raum (17) der Kavität und zumindest teilweise in Kontakt mit den Aluminiumbändern (20);
e) Anordnen des Schaufelfußes (1) in dem zweiten Raum (17) der Kavität (15) der Gussform (2);
f) Einbringen einer Aluminium enthaltenden Verbindung in den ersten Raum (13) der Kavität (15) der Gussform (2), so dass die Faserverstärkung mit der Verbindung getränkt wird.

2. Verfahren nach Anspruch 1,
wobei in Schritt c) Kohlenstoffnanoröhrchen (16), vorzugsweise durch chemische Dampfabscheidung, auf einer Außenseite (18) der Aluminiumbänder (20) angeordnet werden und die Kohlenstoffnanoröhrchen (16) freie Enden (22) aufweisen, die entweder der ersten Vertiefung (8) in dem ersten Raum (13) der Kavität (15) oder der zweiten Vertiefung (10) in dem ersten Raum (13) der Kavität (15) gegenüberliegen.

3. Verfahren nach einem der vorhergehenden Ansprüche,
wobei die Aluminiumbänder (20) durch Verkleben in der Gussform gehalten werden.

4. Verfahren nach einem der vorhergehenden Ansprüche,
wobei die Faserverstärkung eine gewebte Struktur umfasst, die eine Anordnung von Schussfäden und Kettfäden umfasst, wobei sich die Kettfäden in Längsrichtung und die Schussfäden in einer Querrichtung senkrecht zur Längsrichtung erstrecken.

5. Verfahren nach Anspruch 4,
wobei die Kettfäden eine Längsabmessung zwischen 10 und 100% der Längsabmessung des herzustellenden Schaufelblatts aufweisen und die Schussfäden eine Querabmessung zwischen 10 und 100% der Querabmessung des herzustellenden Schaufelblatts aufweisen.

6. Verfahren nach einem der Ansprüche 4 oder 5,
wobei die Faserverstärkung (21) ein Verhältnis zwischen der Anzahl der Schussfäden und der Anzahl der Kettfasern von 0 bis 0,5 aufweist.

7. Verfahren nach einem der Ansprüche 4 bis 6,
wobei die Faserverstärkung (21) so geformt wird, dass sie auf ihrer Oberfläche senkrecht zur Längsachse (24) verlaufende Rillen aufweist, die zwischen den Schussfäden definiert sind, wobei die Breite dieser Rillen zwischen 10 und 150 µm liegt.

8. Verfahren nach Anspruch 7,
wobei die senkrecht zur Längsachse verlaufenden Rillen (24) derart sind, dass ein Verhältnis h/s zwischen 0,1 und 0,6 liegt, wobei h eine durchschnittliche Höhe der senkrecht zur Längsachse verlaufenden Rillen in µm bezeichnet und s eine räumliche Periode der senkrecht zur Längsachse verlaufenden Rillen in µm bezeichnet.

9. Verfahren nach Anspruch 6 oder 8,
wobei ein Parameter des arithmetischen Mittenrauwerts eines Profils der Schaufelblattoberfläche Ra zwischen 10 und 200 µm liegt.

10. Verfahren nach einem der vorhergehenden Ansprüche,
wobei die Verbindung ein Aluminiumschaum ist.

11. Verfahren nach einem der vorhergehenden Ansprüche,
wobei die Verbindung eine Aluminiumlegierung umfasst.

## Claims

1. A method for manufacturing a vane for a turbine engine including a root (1) connected to a blade extending according to a longitudinal direction, the method comprising the steps of:
a) providing a root (1) made of a titanium-based alloy, the root (1) being intended to be assembled on a disc, said root (1) being preferably made by additive manufacturing;
b) providing a mould (2) comprising a first cavity (8) and a second cavity (10) together defining a recess (15) in which the blade is intended to be formed, said recess (15) comprising a first space (13) intended to form the blade and a second space (17) intended to form the root (1),
c) providing aluminium strips (20) including a coating comprising at least one of the hydrophobic and anti-erosion functions and placing them in contact:
o with the first cavity (8) in the first space (13) of the recess (15), and/or
o with the second cavity (10) in the first space (13) of the recess (15);
d) placing a fibrous reinforcement (21) in the first space (13) of the recess (15) and/or in the second space (17) of the recess and at least partially in contact with the aluminium strips (20);
e) arranging said vane root (1) in the second space (17) of the recess (15) of said mould (2);
f) injecting a compound comprising aluminium into the first space (13) of the recess (15) of the mould (2) so that the compound impregnates the fibrous reinforcement.

2. The method according to claim 1, wherein, in step c), carbon nanotubes (16) are placed, preferably by chemical vapour deposition, over an outer face (18) of said aluminium strips (20) and said carbon nanotubes (16) comprising free ends (22) facing either the first cavity (8) in the first space (13) of the recess (15) or the second cavity (10) in the first space (13) of the recess (15).

3. The method according to one of the preceding claims, wherein said aluminium strips (20) are held in the mould by gluing.

4. The method according to one of the preceding claims, wherein the fibrous reinforcement comprises a woven structure comprising an arrangement of weft yarns and warp yarns, the warp yarns extending according to the longitudinal direction and the weft yarns extending according to a transverse direction, perpendicular to the longitudinal direction.

5. The method according to claim 4, wherein the warp yarns have a longitudinal dimension comprised between 10 and 100% of the longitudinal dimension of the blade to be manufactured and the weft yarns have a transverse dimension comprised between 10 and 100% of the transverse dimension of the blade to be manufactured.

6. The method according to one of claims 4 or 5, wherein said fibrous reinforcement (21) has a ratio between the number of weft yarns and the number of warp fibres comprised between 0 and 0.5.

7. The method according to one of claims 4 to 6, wherein said fibrous reinforcement (21) is shaped so as to present at the surface grooves perpendicular to the longitudinal axis (24) defined between the weft yarns, the width of these grooves being comprised between 10 and 150 µm.

8. The method according to claim 7, wherein the grooves perpendicular to the longitudinal axis (24) are such that an h/s ratio is comprised between 0.1 and 0.6 with h denoting an average amplitude of the grooves perpendicular to the longitudinal axis in µm and s denoting a spatial period of the grooves perpendicular to the longitudinal axis in µm.

9. The method according to claim 6 or 8, wherein an arithmetic mean roughness parameter of a profile of the surface of the blade Ra is comprised between 10 and 200 µm.

10. The method according to one of the preceding claims, wherein said compound is an aluminium foam.

11. The method according to one of the preceding claims, wherein said compound comprises an aluminium alloy.
